# EUROPEAN PATENT APPLICATION

(11) **EP 4 391 292 A1**
(43) Date of publication of application: **26.06.2024**
(21) Application number: 23213091.4
(22) Date of filing: 29.11.2023
(51) Int. Cl.: H02J 7/00, H02J 50/00, H02J 50/10, H02J 50/70, H02J 50/50

(54) **APPARATUS AND METHOD FOR IMPROVED WIRELESS CHARGING**

(30) Priority: 13.12.2022 CN 202211594493
(71) Applicant: Honeywell International Inc., Charlotte, NC 28202 (US)
(72) Inventor: CHEN, En Yi, Charlotte, 28202 (US); TIAN, Hang, Charlotte, 28202 (US); OU, Zhi Peng, Charlotte, 28202 (US)
(74) Representative: Haseltine Lake Kempner LLP

(57) **Abstract**

Example wireless charging systems are provided. For example, an example wireless charging system includes a plurality of power receiving coils secured on a receiver inner curved surface of a power receiver curved portion; and a charging relay component comprising ferromagnetic material and defining a receiver relay curved surface.

## Description

### FIELD OF THE INVENTION

Example embodiments of the present disclosure relate generally to charging electronic devices and, more particularly, to apparatuses and methods for providing improved wireless charging of electronic devices such as, but not limited to, example respiratory protective devices.

### BACKGROUND

Applicant has identified many technical challenges and difficulties associated with charging electronic devices. For example, many electronic devices may include surfaces that are uneven (for example, curved), resulting in technical challenges and difficulties in charging such electronic devices.

### BRIEF SUMMARY

Various embodiments described herein relate to methods, apparatuses, and systems for wireless charging are provided.

In accordance with some embodiments of the present disclosure, a wireless charging system is provided.

In some embodiments, the wireless charging system comprises a plurality of power receiving coils secured on a receiver inner curved surface of a power receiver curved portion; and a charging relay component comprising ferromagnetic material and defining a receiver relay curved surface.

In some embodiments, the receiver relay curved surface matches a receiver outer curved surface of the power receiver curved portion.

In some embodiments, the receiver inner curved surface is opposite to the receiver outer curved surface.

In some embodiments, the wireless charging system further comprises: an outer shell component of a respiratory protective device. In some embodiments, the outer shell component comprises the power receiver curved portion.

In some embodiments, a middle section of the outer shell component comprises the power receiver curved portion.

In some embodiments, when the outer shell component is positioned on top of the charging relay component, the receiver relay curved surface of the charging relay component is in contact with the receiver outer curved surface.

In some embodiments, the plurality of power receiving coils is electronically coupled to a power circuit component of the respiratory protective device.

In some embodiments, the wireless charging system further comprises: a magnetic sheet disposed between the plurality of power receiving coils and the receiver inner curved surface of the power receiver curved portion.

In some embodiments, the plurality of power receiving coils comprises at least one flexibly printed power receiving coil.

In some embodiments, the ferromagnetic material comprises one or more of steel material or iron material.

In some embodiments, the charging relay component further comprises modeling clay material.

In some embodiments, the modeling clay material does not comprise calcium silicate.

In some embodiments, the wireless charging system further comprises: a plurality of power emitting coils secured on an emitter inner surface of a power emitting component.

In some embodiments, the plurality of power emitting coils is electronically coupled to a power source.

In some embodiments, the power emitting component comprises an emitter outer surface.

In some embodiments, the emitter inner surface is opposite to the emitter outer surface.

In some embodiments, the charging relay component defines an emitter relay surface.

In some embodiments, the emitter relay surface of the charging relay component matches the emitter outer surface of the power emitting component.

In some embodiments, the receiver relay curved surface of the charging relay component is opposite to the emitter relay surface of the charging relay component.

In some embodiments, when the charging relay component is positioned on top of the power emitting component, the emitter relay surface of the charging relay component is in contact with the emitter outer surface of the power emitting component.

In some embodiments, when the receiver relay curved surface is in contact with the receiver outer curved surface and the emitter relay surface is in contact with the emitter outer surface, the plurality of power emitting coils is aligned with the plurality of power receiving coils.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 illustrates an example side view of an example respiratory protective device in accordance with some example embodiments described herein;
FIG. 2A illustrates an example exploded view of an example mask component in accordance with some example embodiments described herein;
FIG. 2B illustrates another example exploded view of an example mask component in accordance with some example embodiments described herein;
FIG. 2C illustrates another example exploded view of an example mask component in accordance with some example embodiments described herein;
FIG. 2D illustrates an example back view of an example mask component in accordance with some example embodiments described herein;
FIG. 3 provides an example block diagram illustrating example components associated with an example respiratory protective device in accordance with some embodiments of the present disclosure;
FIG. 4 provides an example circuit diagram illustrating example data communications between example components of an example respiratory protective device in accordance with some example embodiments described herein;
FIG. 5 provides an example schematic diagram illustrating an example wireless charging system;
FIG. 6 provides an example schematic diagram illustrating an example wireless charging system in accordance with some embodiments of the present disclosure;
FIG. 7 illustrates an example power receiving component in the form of an example outer shell component of an example respiratory protective device in accordance with some embodiments of the present disclosure;
FIG. 8A illustrates an example view of an example wireless charging system in accordance with some embodiments of the present disclosure;
FIG. 8B illustrates another example view of the example wireless charging system in accordance with some embodiments of the present disclosure;
FIG. 9 provides an example simulation diagram illustrating an example power receiving component and an example power emitting component;
FIG. 10 provides an example simulation diagram illustrating an example power receiving component, an example power emitting component, and an example charging relay component in accordance with some embodiments of the present disclosure;
FIG. 11 illustrates example simulation results of an example wireless charging system comprising an example power receiving component and an example power emitting component;
FIG. 12 illustrates example simulation results of an example wireless charging system comprising an example power receiving component, an example power emitting component, and an example charging relay component in accordance with some embodiments of the present disclosure;
FIG. 13 illustrates example simulation results of an example wireless charging system comprising an example power receiving component and an example power emitting component; and
FIG. 14 illustrates example simulation results of an example wireless charging system comprising an example power receiving component, an example power emitting component, and an example charging relay component in accordance with some embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

Respiratory protective devices (such as, but not limited to, masks, respirators, and/or the like) can protect the health of not only those who wear them, but also those around people who wear them. For example, when a user wears a respiratory protective device, the respiratory protective device can prevent inhalation of hazardous substances (such as, but not limited to, harmful dusts, smokes, mists, gasses, vapors, and/or the like) from the environment. As another example, respiratory protective devices can reduce the likelihood and the amount of droplets and aerosols that are released by users who wear them into the environment through exhalation, therefore can reduce and/or prevent spreading of respiratory viruses.

However, there are many technical challenges and difficulties associated with respiratory protective devices. For example, respiratory protective devices may comprise electronic components (such as, but not limited to, controller components, fan components, light components, and/or the like) that require electric power to operate.

Some respiratory protective devices may provide capabilities to charge these electronic components through wired charging mechanisms (such as, but not limited to, through power cables plugged into the respiratory protective devices). However, wired charging mechanisms may affect the appearances of the respiratory protective devices, and may be inconvenient and/or impractical in many instances. For example, wired charging mechanisms require the respiratory protective devices to include power charging ports so that power cables can be plugged into the respiratory protective devices. Because the respiratory protective devices are in close contact with users when the respiratory protective devices are in use, power charging ports on the respiratory protective devices can increase safety risk (such as, but not limited to, electricity leakage from the power charging ports of the respiratory protective devices).

While wireless charging mechanisms can provide technical benefits and advantages over wired charging mechanisms, it is technically challenging and difficult to implement wireless charging in respiratory protective devices.

For example, many wireless charging mechanisms require a power transmitter and a power receiver. In such an example, the power transmitter comprises power transmitting coils and the power receiver comprises power receiving coils. During wireless charging, the power transmitter and the power receiver must be placed in parallel and in contact with one other in order. If the power receiver has an irregular surface that cannot fully contact the surface of the power transmitter, the amount of electrical energy that can be transferred from the power transmitter to the power receiver is limited.

In addition, the relevant positions of the power transmitter and the power receiver are important in such wireless charging mechanisms. For example, the center position of the power transmitting coils in the power transmitter and the center position of the power receiving coils in the power receiver must be aligned with one another. If the power transmitting coils and the power receiving coils are not aligned with one another, the charging efficiency is low.

As illustrated in the examples above, applying wireless charging mechanisms in respiratory protective devices can be difficult. In particular, many respiratory protective devices (such as, but not limited to, masks) are shaped based on the contours of the human face, and therefore include one or more surfaces that are curved, uneven, and/or irregular. If the above described wireless charging mechanisms are implemented in such respiratory protective devices, the transmitting coils of the power transmitter are positioned under the curved, uneven, and/or irregular surfaces of the respiratory protective device. When the respiratory protective device is placed on a power receiver (for example, a wireless charging pad), there is a gap between the power transmitting coils of the power transmitter and the power receiving coils of the power receiver due to the curved, uneven, and/or irregular surfaces of the respiratory protective device. In such an example, at least a portion of the magnetic induction lines will leak out through the gap, resulting in low charging efficiency.

In addition, the leakage of magnetic induction lines can easily lead to magnetic saturation. While some wireless charging mechanisms may increase the switching frequency where there is magnetic saturation, the increased switching frequency can result in increased switching loss and low charging efficiency.

As such, when such wireless charging mechanisms are implemented in devices that comprise curved surfaces (such as, but not limited to, respiratory protective devices), such implementations can result in many technical disadvantages such as, but not limited to, low charging efficiency, increased heating and poor adaptability.

Various embodiments of the present disclosure overcome these technical challenges and difficulties.

For example, various embodiments of the present disclosure provide charging relay components that comprise soft magnetic or ferromagnetic materials. In some embodiments, the charging relay components can be pressed and/or shaped based on the surface of the respiratory protective device, facilitating connections of magnetic induction lines between power receiving coils in the respiratory protective devices and power transmitting coils in the power transmitter. As such, the charging relay components can increase the charging efficiency.

Additionally, or alternatively, various embodiments of the present disclosure provide charging relay components that comprise modeling clay materials (such as, but not limited to, putty materials). In particular, various embodiments of the present disclosure may replace the calcium silicate from the putty materials with soft magnetic or ferromagnetic materials, creating magnetic or ferromagnetic plasticine. In such an example, the charging relay components are morphable, and can be adapted to different curved surfaces to increase the charging efficiency of different electronic devices.

By implementing the charging relay components, an example wireless charging system in accordance with some embodiments of the present disclosure can provide various technical improvements and benefits. For example, the power transmitter of the example wireless charging system does not need to be shaped into a special shape in order to match the curved surface of the power receiver. In addition, the morphable charging relay components can fill any gap or space between the surface of the power emitter and the curved surface of the power receiver, increasing charging efficiency, reducing emitter heating and increasing versatility. Further, electronic devices with curved surfaces (such as, but not limited to, respiratory protective devices described herein) can integrate wireless charging function without modifications to the curved surface, and any wireless charging transmitter can be implemented to charge such electronic devices through the charging relay components.

As such, various embodiments of the present disclosure resolve various technical shortcomings of wireless charging mechanisms for curved electronic devices (including, but not limited to, respiratory protective devices such as masks) without significantly increasing the manufacturing cost for such curved electronic devices, providing verifiable solutions that significantly improve the charging performance.

As described in detail herein, various embodiments of the present disclosure provide ergonomically designed respiratory protective devices that implement wearable technologies, providing great fit to users and enhanced functions for the modern lifestyle. For example, an example respiratory protective device provides features (such as, but not limited to, powered air supply, high-efficiency particulate absorbing (HEPA) filters, breath pattern detection, near-field communication (NFC) air quality monitoring and/or the like) for optimal breathability. By implementing example wireless charging systems in accordance with some embodiments of the present disclosure, an example respiratory protective device can provide better performance in wireless charging with little cost increase, satisfying the need from users and providing better user experience.

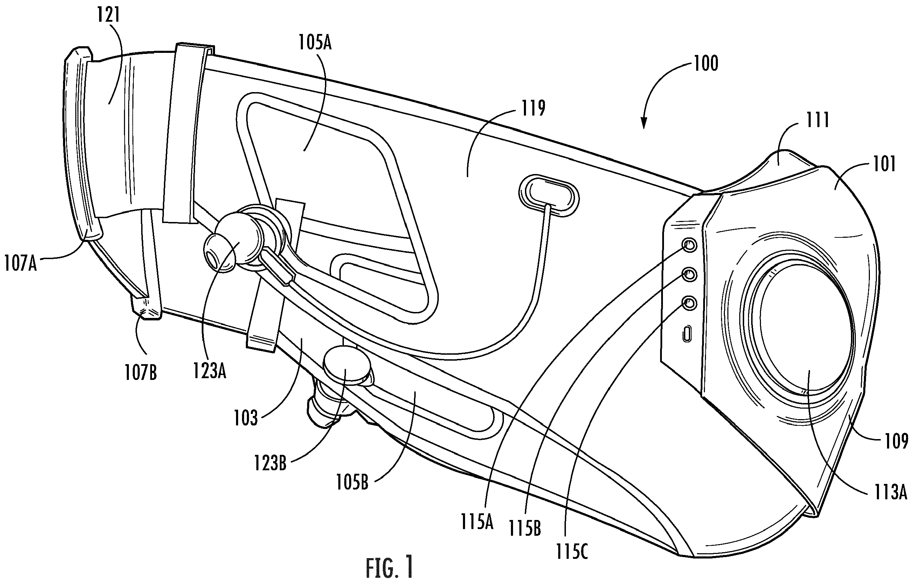

Referring now to FIG. 1, an example perspective view of an example respiratory protective device 100 (also referred to as a respiratory protective equipment) in accordance with some example embodiments described herein is illustrated.

In some embodiments, the example respiratory protective device 100 is in the form of a respirator or a mask. For example, as shown in FIG. 1, the example respiratory protective device 100 comprises a mask component 101 and a strap component 103.

While the description above provides an example of a respiratory protective device in the form of a respirator/mask, it is noted that the scope of the present disclosure is not limited to the description above. In some examples, an example respiratory protective device may be in one or more additional and/or alternative forms.

Referring back to FIG. 1, in some embodiments, the strap component 103 may be in the form of a strap that connects or fastens one end of the mask component 101 to another end of the mask component 101.

In some embodiments, the strap component 103 comprises at least one non-elastic portion 119 and at least one elastic portion 121. In some embodiments, the at least one elastic portion 121 is connected to the at least one non-elastic portion 119.

In some embodiments, the at least one non-elastic portion 119 may comprise nonelastic materials or materials with low elasticity such as, but not limited to, cotton, yarns, fabric (including, but not limited to, woven fabric, non-woven fabric), and/or the like. In some embodiments, the mask component 101 is secured on the at least one non-elastic portion 119.

In some embodiments, at least one elastic portion 121 may comprise elastic material(s) such as, but not limited to, polymers, thermoplastic elastomers (TPE), and/or the like. In some embodiments, the at least one elastic portion 121 allows the strap component 103 to adapt to different head sizes of users.

For example, in the example shown in FIG. 1, the at least one elastic portion 121 of the strap component 103 may be inserted through one or more strap bucket components (such as the strap bucket component 107A and the strap bucket component 107B as shown in FIG. 1). In some embodiments, the one or more strap bucket components (such as the strap bucket component 107A and the strap bucket component 107B as shown in FIG. 1) may be in the form of one or more buckles that include, but not limited to, a tri-glide buckle. In some embodiments, when the one or more strap bucket components (such as the strap bucket component 107A and the strap bucket component 107B as shown in FIG. 1) move along the at least one elastic portion 121 of the strap component 103, the length of the strap component 103 is adjusted. As such, a user can adjust the length of the strap component 103 so that the example respiratory protective device 100 can be secured to a user's face.

In some embodiments, the strap component 103 may comprise an ear opening 105A and an ear opening 105B. When the example respiratory protective device 100 is worn by a user, the ear opening 105A and the ear opening 105B may allow the user's left ear and right ear to pass through.

In some embodiments, the mask component 101 is connected or fastened to the strap component 103. In the example shown in FIG. 1, the mask component 101 is secured to the at least one non-elastic portion 119 of the strap component 103. For example, the mask component 101 may be fastened to the at least one non-elastic portion 119 of the strap component 103 through one or more chemical glues. Additionally, or alternatively, the mask component 101 may be fastened to the at least one non-elastic portion 119 of the strap component 103 through one or more fastener components (such as, but not limited to, one or more snap buttons).

While the description above provides an example fastening mechanism to secure the mask component to the strap component, it is noted that the scope of the present disclosure is not limited to the description above. In some examples, an example mask component may be secured to an example strap component through one or more additional and/or alternative mechanisms. For example, a first end of the strap component can be connected to a first end of the mask component, and a second end of the strap component can be connected to a second of the mask component. In this example, the first end of the mask component is opposite to the second end of the mask component.

As described above, the mask component 101 may be in the form of a mask or a respirator. In the example shown in FIG. 1, the mask component 101 may comprise an outer shell component 109 and a face seal component 111.

In some embodiments, when the example respiratory protective device 100 is worn by a user, an outer surface of the outer shell component 109 is exposed to the outside environment. In some embodiments, the face seal component 111 is attached to and extends from a periphery and/or edge of the outer shell component 109 (or is attached to and extends from a periphery and/or edge of or an inner shell component of the mask component as described herein).

In some embodiments, the face seal component 111 may comprise soft material such as, but not limited to, silica gel. In some embodiments, when the example respiratory protective device 100 is worn by a user, the face seal component 111 is in contact with the user's face, and may seal the example respiratory protective device 100 to at least a portion of a user's face. As described above, the example respiratory protective device 100 includes a strap component 103 that allows the example respiratory protective device 100 to be secured to the user's head. As such, the face seal component 111 can create at least partially enclosed (or entirely enclosed) space between at least a portion of the user's face (e.g. mouth, nostrils, etc.) and the example respiratory protective device 100, details of which are described herein.

In some embodiments, the mask component 101 comprises one or more puck components that cover one or more inhalation filtration components of the example respiratory protective device 100. In some embodiments, each of the puck components is in the form of a circular cover structure. Additionally, or alternatively, each of the puck components can be in other shapes and/or forms.

In the example shown in FIG. 1, the example respiratory protective device 100 comprises a first puck component 113A that is disposed on a left side of the outer shell component 109 and a second puck component that is disposed on a right side of the outer shell component 109. In such an example, the first puck component 113A covers a first inhalation filtration component that is disposed on the left side of the mask component 101, and the second puck component covers a second inhalation filtration component that is disposed on the right side of the mask component 101, details of which are described herein.

In some embodiments, the mask component 101 comprises one or more key components (such as, but not limited to, the key component 115A, the key component 115B, and the key component 115C as shown in FIG. 1). In some embodiments, each of the one or more key components is a physical button that may allow a user to manually control operations of various components of the mask component 101 (such as, but not limited to, the fan components as described herein) and/or other devices that are in electronic communication with the example respiratory protective device 100 (such as, but not limited to, earpiece devices).

In some embodiments, the example respiratory protective device 100 comprises one or more earpiece devices. In the example shown in FIG. 1, the example respiratory protective device 100 comprises an earpiece device 123A and an earpiece device 123B. In some embodiments, each of the earpiece device 123A and the earpiece device 123B are active noise canceling (ANC) earbuds. In some embodiments, a user may utilize at least the earpiece device 123A and the earpiece device 123B to conduct one or more telephone calls.

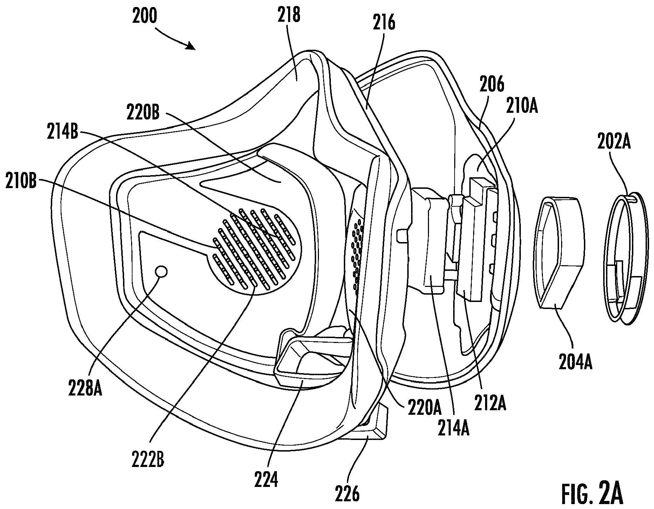

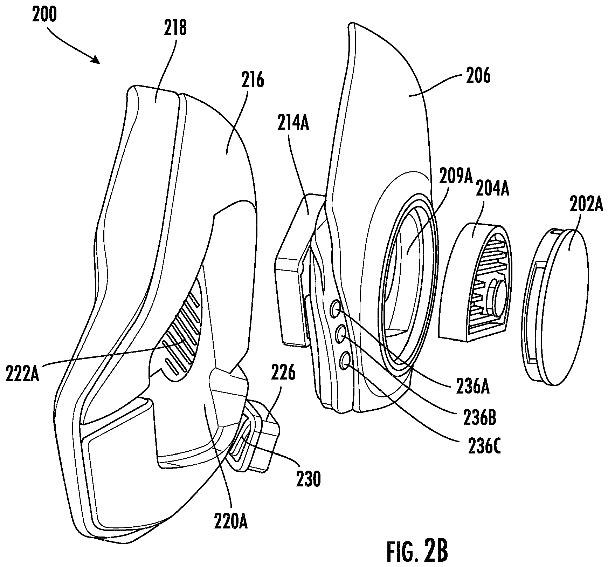

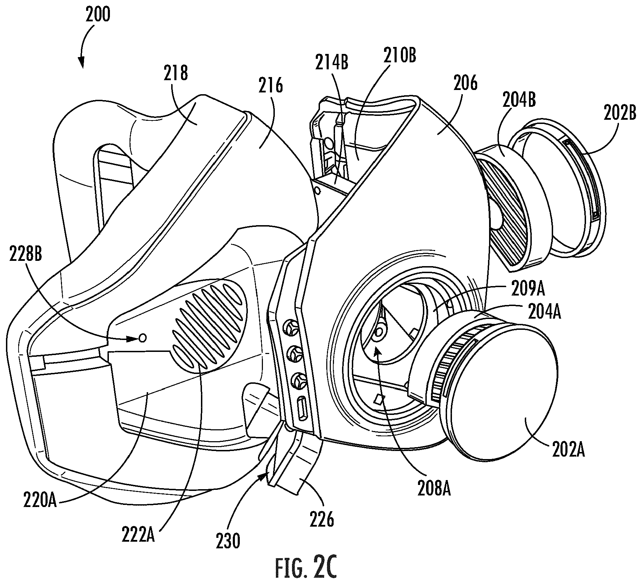

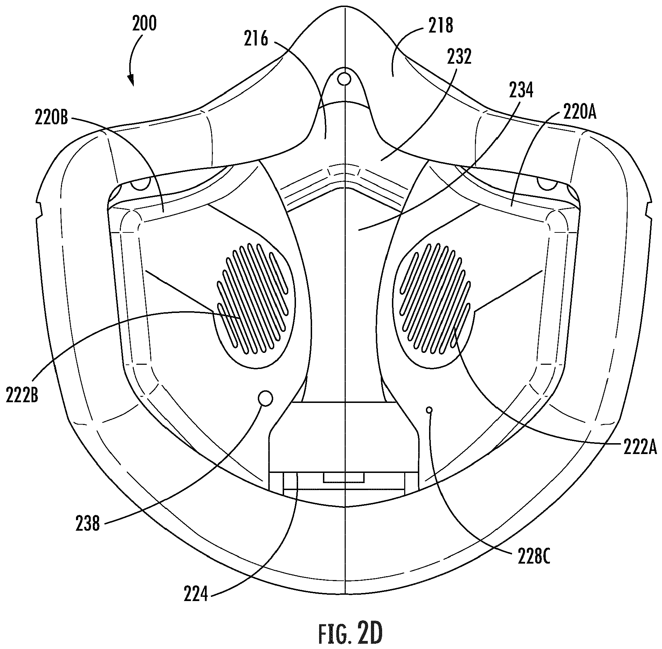

Referring now to FIG. 2A, FIG. 2B, FIG. 2C, and FIG. 2D, example views of an example mask component 200 in accordance with some example embodiments of the present disclosure are illustrated. In particular, FIG. 2A to FIG. 2C illustrate example exploded views of the example mask component 200, and FIG. 2D illustrates an example back view of the example mask component 200.

As shown in FIG. 2A, the mask component 200 comprises an outer shell component 206 and an inner shell component 216.

In some embodiments, the inner shell component 216 may be in a shape that is based on the contour of the user's face. In particular, when the mask component 200 is worn by a user, at least a portion of the user's face (such as, but not limited to, mouth, nostrils) are housed within the inner shell component 216.

In some embodiments, the mask component 200 may comprise a face seal component 218. In some embodiments, the face seal component 218 is attached to and extends from a periphery and/or edge of the inner shell component 216. Similar to the face seal component 111 described above in connection with FIG. 1, the face seal component 218 may comprise soft material such as, but not limited to, silica gel. In some embodiments, when the mask component 200 is worn by a user, the face seal component 218 and an inner surface of the inner shell component 216 create an enclosed space between at least a portion of the user's face (e.g. on the mouth, nostrils, etc.) and the mask component 200.

Similar to the shape of the inner shell component 216 described above, the shape of the outer shell component 206 may be based on a contour of the user's face. In some embodiments, when the mask component 200 is assembled, the inner surface of the outer shell component 206 is secured to an outer surface of the inner shell component 216.

In some embodiments, the inner shell component 216 may comprise one or more indentation portions on the outer surface of the inner shell component 216. In particular, each of the one or more indentation portions may be sunken or depressed from the outer surface of the inner shell component 216. In the example shown in FIG. 2A, FIG. 2B, and FIG. 2C, the inner shell component 216 may comprise inner shell indentation portions such as, but not limited to, an inner shell indentation portion 220A that is on a left side of the inner shell component 216 and an inner shell indentation portion 220B that is on a right side of the inner shell component 216.

In some embodiments, when the inner surface of the outer shell component 206 is secured to outer surface of the inner shell component 216, the indentation portions of the inner shell component 216 (e.g., the inner shell indentation portion 220A and inner shell indentation portion 220B) may create space between the inner shell component 216 and the outer shell component 206.

In some embodiments, one or more components of the mask component 200 are housed, disposed, or positioned within the space formed by the indentation portions of the inner shell component 216 (e.g., the inner shell indentation portion 220A and inner shell indentation portion 220B) and the outer shell component 206. For example, one or more circuit board components, one or more power charging components, and one or more fan components may be disposed in the space that is defined by the inner shell indentation portions of the inner shell component 216 and the outer shell component 206.

In the examples shown in FIG. 2A, FIG. 2B, and FIG. 2C, a circuit board component 210A, a power charging component 212A, and a fan component 214A are disposed in the space that is defined by the inner shell indentation portion 220A of the inner shell component 216 and the outer shell component 206. Additionally, or alternatively, a circuit board component 210B, a power charging component, and a fan component 214B are disposed in the space that is defined by the inner shell indentation portion 220B and the outer shell component 206.

In some embodiments, an example circuit board component comprises a medium or a substrate where one or more electronic components can be secured to and in electronic communications with one another. In some embodiments, an example circuit board component may be in the form of one or more printed circuit boards (PCBs). For example, the example circuit board component may comprise one or more layers such as, but not limited to, a conductive layer and an insulating layer. In such an example, the conductive layer defines conductive pads and patterns of traces and wires that connect the conductive pads.

In some embodiments, one or more electronic components may be soldered, fixed, or otherwise electronically coupled to one or more conductive pads, such that the one or more electronic components can be in electronic communications with one another. Examples of the electronic components include, but are not limited to, a main controller component, an analog-to-digital converter component, a data communication component, and/or the like.

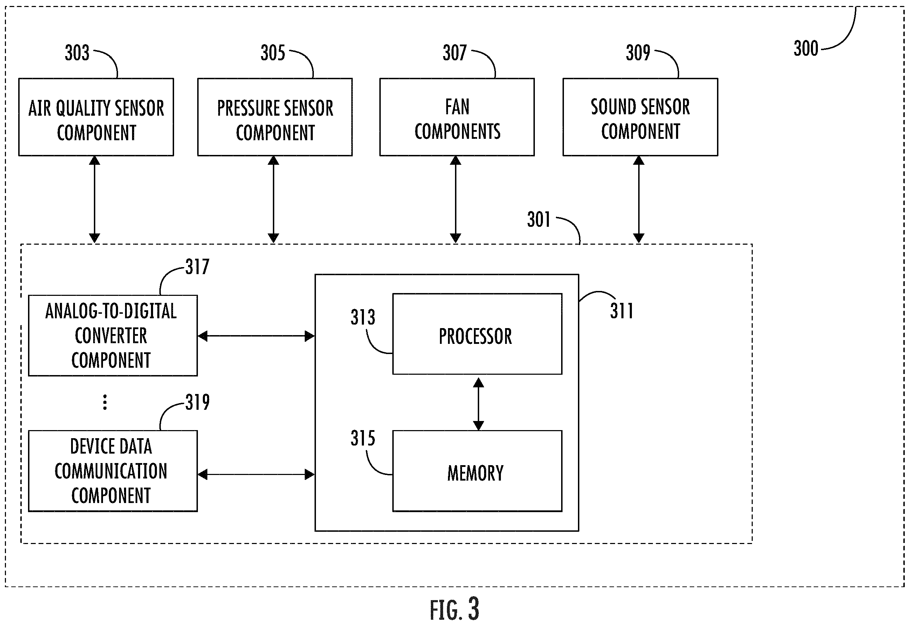

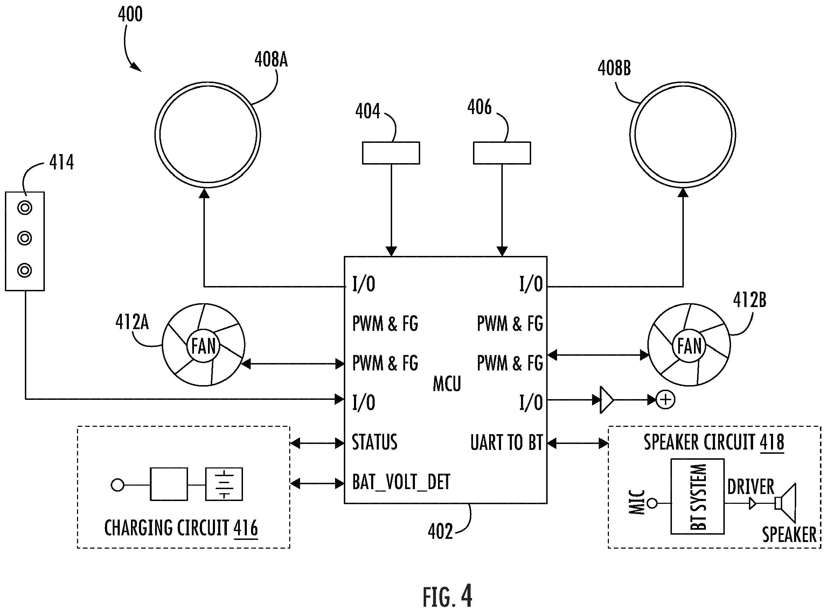

In some embodiments, a main controller component is electronically coupled to the circuit board component. For example, an example main controller component in accordance with some embodiments of the present disclosure may be in the form of a microcontroller or a microcontroller unit. In such an example, the pins of the microcontroller or the microcontroller unit can be securely connected and electronically coupled to the conductive pads of the circuit board component. Additional details associated with the main controller component are described herein, including, but not limited to, those described in connection with at least FIG. 3 and FIG. 4.

Additionally, or alternatively, an analog-to-digital converter component is electronically coupled to the circuit board component. For example, an example analog-to-digital converter component in accordance with some embodiments of the present disclosure may be in the form of an analog-to-digital converter (ADC) that converts an analog signal into a digital signal. Additional details associated with the analog-to-digital converter component are described herein, including, but not limited to, those described in connection with at least FIG. 3.

Additionally, or alternatively, a data communication component is electronically coupled to the circuit board component. For example, an example data communication component in accordance with some embodiments of the present disclosure may be in the form of semiconductor integrated circuits (IC) that may comprise one or more transmitters and/or one or more receivers. In some embodiments, an example data communication component may support one or more data communication protocols, including, but not limited to, those described in connection with at least FIG. 3.

While the description above provides an example of a circuit board component and example components that are securely connected and/or electronically coupled to an example circuit board component, it is noted that the scope of the present disclosure is not limited to the description above. For example, an example mask component may comprise only one circuit board component. Additionally, or alternatively, an example circuit board component may comprise more than one PCB. Additionally, or alternatively, an example circuit board component may connect one or more other electronic components.

As described above, at least one fan component is secured to an example respiratory protective device in accordance with some embodiments of the present disclosure. In some embodiments, an example fan component may comprise an electric fan. In some embodiments, each of one or more fan components of the mask component is disposed in the space that is defined by an inner shell indentation portion of the inner shell component and the outer shell component.

For example, the mask component 200 comprises a fan component 214A and a fan component 214B. In some embodiments, the fan component 214A may be disposed on the right side of the mask component 200 and in the space that is defined by the inner shell indentation portion 220A of the inner shell component 216 and the outer shell component 206. In some embodiments, the fan component 214B may be disposed on the left side of the mask component 200 and in the space that is defined by the inner shell indentation portion 220B of the inner shell component 216 and the outer shell component 206.

While the description above provides an example mask component comprising two fan components, it is noted that the scope of the present disclosure is not limited to the description above. In some examples, an example mask component may comprise less than two or more than two fan components.

In some embodiments, an example fan component may operate at different rotation speeds. For example, the example fan component may be in the form of a stepped fan that provides different, predetermined settings for the rotation speeds. Additionally, or alternatively, the example fan component may be in the form of a stepless fan that enables continuous adjustment of the rotation speed.

In some embodiments, an example fan component may operate at different rotational directions. For example, the example fan component may operate in a forward direction or a reverse direction. As an example, when the example fan component operates in the forward rotational direction, the electric fan of the example fan component may rotate counter-clockwise (when viewing from a user wearing the mask component 200) and/or may operate as a blower that draws air from outside the mask component 200 to inside the mask component 200. As another example, when the example fan component operates in the reverse rotational direction, the example fan component may rotate clockwise (when viewing from a user wearing the mask component 200) and/or may operate as an exhaust/ventilation fan that draws air from inside the mask component 200 to outside the mask component 200.

In some embodiments, the one or more fan components are electronically coupled to the main controller component on the example circuit board component, such that the one or more fan components and the main controller component are in data communications with one another.

In some embodiments, various operation parameters of the fan components (such as, but not limited to, the start time, the stop time, the rotational directions (e.g. forward direction or reverse direction) and/or the rotation speed) may be controlled and/or adjusted by the main controller component.

For example, the main controller component may transmit a fan component activation signal to the fan component that causes the fan component to start operating (e.g. causes the electric fan to start rotating). In some embodiments, the fan component activation signal comprises a rotation speed value that indicates the speed for the fan component.

Additionally, or alternatively, the main controller component may transmit a fan component deactivation signal to the fan component that causes the fan component to stop operating (e.g. causes the electric fan to stop rotating).

Additionally, or alternatively, the main controller component may transmit a forward rotation start signal to a fan component that causes the fan component to start forward rotation (e.g. start operating as a blower that draws air from outside the mask component 200 towards inside the mask component 200). In some embodiments, the forward rotation start signal may include a forward rotation speed value that indicates the speed for the fan component. Additionally, or alternatively, the main controller component may transmit a forward rotation stop signal to the fan component that causes the fan component to stop forward rotation.

Additionally, or alternatively, the main controller component may transmit a reverse rotation start signal to a fan component that causes the fan component to start reverse rotation (e.g. start operating as an exhaust fan that draws air from inside the mask component 200 towards outside the mask component 200). In some embodiments, the reverse rotation start signal may include a reverse rotation speed value that indicates the speed for the fan component. Additionally, or alternatively, the main controller component may transmit a reverse rotation stop signal to the fan component that causes the fan component to stop reverse rotation.

In some embodiments, various operation parameters of the fan components (such as, but not limited to, the start time, the stop time, the rotational directions (e.g. forward direction or reverse direction) and/or the rotation speed) may be read or determined by the main controller component.

For example, the main controller component may receive one or more fan speed signals from the one or more fan components. In such an example, each of the one or more fan speed signals comprises a rotation speed indication associated with the corresponding fan component, and the rotation speed indication indicates a current rotation speed of the electric fan of the fan component.

In some embodiments, the power charging component 212A is electronically coupled to one or more electronic components on the circuit board component 210A (such as, but not limited to, the main controller component) and to one or more fan components (such as, but not limited to, the fan component 214A and the fan component 214B). In some embodiments, the power charging component 212A may provide power to the one or more electronic components on the circuit board component 210A (such as, but not limited to, the main controller component) and to one or more fan components (such as, but not limited to, the fan component 214A and the fan component 214B).

For example, the power charging component 212A may comprise a device power source component.

In some embodiments, the device power source component refers to an electronic component that provides a source of electrical energy. In some embodiments, an example device power source component in accordance with some embodiments of the present disclosure may be in the form of, such as but not limited to, one or more batteries, one or more supercapacitors, one or more ultracapacitors, and/or the like.

In some embodiments, the device power source component is electronically coupled to one or more other electronic components associated with the respiratory protective device (such as, but not limited to, the main controller component). In such examples, the device power source component provides electrical energy to these other electronic components.

In some embodiments, the example device power source component is rechargeable. For example, an example device power source component in accordance with some embodiments of the present disclosure can be recharged through, for example, a wireless charger circuit, a Universal Serial Bus (USB) charger circuit, an integrated circuit (IC) battery charger circuit, and/or the like.

Additionally, in some embodiments, the power charging component 212A may comprise the device power source component and a power charging circuit component.

In some embodiments, the device power source component can charge other electronic components through the charging circuit component. For example, the power charging circuit component may be electronically coupled to the device power source component and one or more other electronic components that are associated with the respiratory protective device (such as, but not limited to, the main controller component). In such an example, the power charging circuit component transfers electrical energy from the device power source component to the one or more other electronic components. In some embodiments, the power charging circuit component optimizes the electrical energy from the device power source component for consumption by other electronic components. For example, the power charging circuit component may comprise one or more voltage regulators so that a constant voltage can be provided to other electronic components. Additionally, or alternatively, the power charging circuit component may comprise one or more voltage divider circuits so that a suitable voltage can be provided to other electronic components.

While the description above provides example components (such as, but not limited to, circuit board components, fan components, and power charging components) that are housed, disposed, or positioned within the space formed by the indentation portions of the inner shell component 216 and the outer shell component 206, it is noted that the scope of the present disclosure is not limited to the examples above. In some embodiments, circuit board components, fan components, and/or power charging components may be disposed or positioned outside the space formed by the indentation portions of the inner shell component 216 and the outer shell component 206. In some embodiments, one or more other components may additionally or alternatively be housed, disposed, or positioned within the space formed by the indentation portions of the inner shell component 216 and the outer shell component 206.

Referring back to FIG. 2B, the mask component 200 may comprise one or more key components such as, but not limited to, a key component 236A, a key component 236B, and a key component 236C. In some embodiments, the one or more key components may be disposed on an outer surface of the outer shell component 206. In some embodiments, each of the one or more key components may provide a button that allows a user to control and/or adjust the operations of various electronic components described herein (such as, but not limited to, fan components, earpieces, and/or the like).

In some embodiments, when the mask component 200 is worn by a user, the user can inhale through the mask component 200. In some embodiments, the air inhaled by the user is filtered by one or more inhalation filtration components.

For example, the mask component 200 may comprise one or more inhalation filtration components (such as, but not limited to, inhalation filtration component 204A and inhalation filtration component 204B). In some embodiments, each of the one or more inhalation filtration components may comprise a filter media element that comprise filter material for filtering air. Examples of filter material include, but are not limited to, high efficiency particulate air (HEPA) filters.

While the description above provides an example mask component comprising two inhalation filtration components, it is noted that the scope of the present disclosure is not limited to the description above. In some examples, an example mask component may comprise less than two or more than two inhalation filtration components.

In some embodiments, the mask component 200 comprises one or more puck components (such as, but not limited to, puck component 202A and puck component 202B). In some embodiments, each of the one or more puck components may be positioned to cover one of the inhalation filtration components so as to prolong the lifespan of the mask component 200. For example, the puck component 202A may cover the inhalation filtration component 204A, and the puck component 202B may cover the inhalation filtration component 204B.

In some embodiments, the one or more inhalation filtration components (such as, but not limited to, inhalation filtration component 204A and inhalation filtration component 204B) are disposed in outer shell indentation portion(s) of the outer shell component 206.

For example, as shown in FIG. 2C, the outer shell component 206 of the example mask component 200 may comprise one or more outer shell indentation portions (such as, but not limited to, the outer shell indentation portion 209A). In some embodiments, each of the outer shell indentation portions (such as the outer shell indentation portion 209A) may be sunken or depressed from the outer surface of the outer shell component 206. In the example shown in FIG. 2C, an inhalation filtration component 204A is disposed in the outer shell indentation portion 209A of the outer shell component 206.

In some embodiments, each of the one or more outer shell indentation portions may comprise an air inlet opening. In the example shown in FIG. 2C, the outer shell indentation portion 209A of the outer shell component 206 comprises the air inlet opening 208A.

In some embodiments, each of the one or more inhalation filtration components (that are disposed in an outer shell indentation portion of an outer shell component) is positioned to at least partially or fully cover an air inlet opening of the outer shell indentation portion. In the example shown in FIG. 2C, the inhalation filtration component 204A is positioned on the outer shell indentation portion 209A of the outer shell component 206 and at least partially covers the air inlet opening 208A of the outer shell indentation portion 209A. As such, air may flow through the inhalation filtration component 204A and be released through the air inlet opening 208A of the outer shell indentation portion 209A.

As described above, an example mask component may comprise one or more fan components that are each disposed on an inner shell indentation portion of the inner shell component 216. In some embodiments, when the mask component 200 is assembled, the outer shell component 206 is secured to the inner shell component 216. In the example shown in FIG. 2B and FIG. 2C, a fan inlet of the fan component 214A (disposed on the inner shell indentation portion of the inner shell component 216) is aligned within the air inlet opening 208A (on the outer shell indentation portion 209A of the outer shell component 206). As such, air may flow from the air inlet opening 208A of the outer shell indentation portion 209A to the input opening of the fan component 214A.

In the present disclosure, a fan component may comprise a fan inlet and a fan outlet. In some embodiments, when the fan component operates, the fan component drags air in from the fan inlet and pushes air out through the fan outlet.

For example, an example fan component in accordance with some embodiments of the present disclosure may be in the form of a centrifugal fan. In such an example, the example fan component comprises impellers in the form of a rotating wheel of blades. When the impellers rotate, the impellers drag air in through the fan inlet and cause the air to enter into circular motions. The circular motions in turn create centrifugal force, which pushes air out from the fan component through the fan outlet.

While the description above provides an example centrifugal fan as an example fan component, it is noted that the scope of the present disclosure is not limited to the description above. In some examples, an example fan component may be in one or more additional and/or alternative forms.

As described above, an example mask component may comprise one or more fan components that are each disposed on an inner shell indentation portion of the inner shell component 216. In some embodiments, each of the one or more inner shell indentation portions of the inner shell component 216 may comprise one or more air inlet slots. In some embodiments, the one or more fan outlet(s) of the one or more fan components are each aligned with one of the one or more air inlet slots on the inner shell component 216.

For example, in the example shown in FIG. 2C, the inner shell indentation portion 220A comprises air inlet slots 222A on the bottom surface of the inner shell indentation portion 220A. In some embodiments, the fan outlet of the fan component 214A is aligned with the air inlet slots 222A. As such, the fan component 214A pushes air out from the fan outlet and through the air inlet slots 222A of the inner shell indentation portion 220A.

While the description above describes example air inlet slots that are disposed on the bottom surface of the inner shell indentation portion of the inner shell component, it is noted that the scope of the present disclosure is not limited to the description above. In some examples, one or more air inlet slots may be additionally or alternatively disposed on the side surfaces of the inner shell indentation portion of the inner shell component.

In accordance with some embodiments of the present disclosure, example fan components in the mask component can facilitate the user's breathing.

For example, when the user inhales, the fan component 214A may operate in a forward direction that draws air from outside the mask component 200 towards inside the mask component 200. In this example, the fan component 214A drags air from the outside environment through the inhalation filtration component 204A, then through the air inlet opening 208A on the outer shell indentation portion 209A of the outer shell component 206, and then into the fan inlet of the fan component 214A. Continuing this example, the fan component 214A pushes air out from the fan outlet of the fan component 214A, then through the air inlet slots 222A of the inner shell indentation portion 220A, and then into the space between the user's face and the mask component 200. In some embodiments, the fan component 214A can increase the volume and/or the flow rate of air entering the space between the user's face and the mask component 200, thereby facilitating the inhalation of the user.

In some embodiments, when the mask component 200 is worn by a user, the user can exhale through the mask component 200. In some embodiments, the air exhaled by the user is filtered by one or more exhalation filtration components.

For example, referring now to FIG. 2D, an example back view of the example mask component 200 is illustrated. In particular, FIG. 2D illustrates the inner surface of the inner shell component 216 when the example mask component 200 is worn by a user.

In the example shown in FIG. 2D, the example mask component 200 may comprise air inlet slots that are located on the middle right side of the inner shell component 216 (for example, air inlet slots 222A) and/or air inlet slots that are located on the middle left side of the inner shell component 216 (for example, air inlet slots 222B).

In some embodiments, the inner surface 232 of the inner shell component 216 may comprise a nose portion 234, which is located close to a user's nose when the user wears the mask component 200. In this example, the air inlet slots 222A may be located to the right of the nose portion 234, and the air inlet slots 222B may be located to the left of the nose portion 234.

In some embodiments, the example mask component 200 may comprise an outlet opening 224 that is on a middle bottom portion of the inner shell component 216. In some embodiments, the outlet opening 224 may be located corresponding to the position of the user's mouth. For example, when a user exhales, the breath may be released through the outlet opening 224.

As shown in FIG. 2A to FIG. 2C, an exhalation filtration component 226 may be connected to the inner shell component 216 at the outlet opening 224. For example, the exhalation filtration component 226 may cover the outlet opening 224. In some embodiments, the exhalation filtration component 226 may comprise a filter media element that comprises filter material for filtering air. Examples of filter material include, but are not limited to, HEPA filters. As such, the breath that is exhaled by the user may be filtered before it is released from inside the mask component 200 to the outside environment.

In accordance with some embodiments of the present disclosure, various sensor components may be implemented in the example mask component 200 to detect, generate, and determine one or more operational signals associated with the example mask component 200.

For example, an example mask component in accordance with some embodiments of the present disclosure may comprise one or more pressure sensor components. For example, when the mask component 200 is worn by a user, the face seal component 218 and an inner surface 232 of the inner shell component 216 create an enclosed space on at least a portion of the user's face (e.g. on the mouth, nostrils, etc.). In some embodiments, a pressure sensor component may comprise a pressure sensor that detects the air pressure within this enclosed space. Examples of the pressure sensor components include, but are not limited to, resistive air pressure transducer or strain gauge, capacitive air pressure transducer, inductive air pressure transducer, and/or the like. In the example shown in FIG. 2A, a pressure sensor component 228A may be disposed on an inner surface of the inner shell component 216. Additionally, or alternatively, as shown in FIG. 2C, a pressure sensor component 228B may be disposed on the inner shell indentation portion 220A of the inner shell component 216. Additionally, or alternatively, as shown in FIG. 2D, a pressure sensor component 228C may be disposed on the inner surface of the inner shell component 216. In some embodiments, the pressure sensor component 228A, the pressure sensor component 228B, and/or the pressure sensor component 228C may detect the air pressure within the enclosed space defined by the face seal component 218 and the inner shell component 216 on at least a portion of the user's face.

Additionally, or alternatively, an example mask component in accordance with some embodiments of the present disclosure may comprise one or more humidity sensor components and/or one or more air quality sensor components.

In some embodiments, the mask component 200 comprises a humidity sensor component 230 that is disposed in the exhalation filtration component 226 and at least partially covers the outlet opening 224 of the inner shell component 216. In some embodiments, the humidity sensor component 230 may comprise a humidity sensor that may, for example but not limited to, detect humidity levels within the enclosed space and/or in the breath exhaled by the user. Examples of the humidity sensor component 230 include, but are not limited to, capacitive humidity sensors, resistive humidity sensors, thermal humidity sensors, and/or the like.

In some embodiments, the mask component 200 comprises an air quality sensor component in addition to or in alternative of the humidity sensor component 230. For example, the air quality sensor component may be disposed in the exhalation filtration component 226 and at least partially covers the outlet opening 224 of the inner shell component 216. In some embodiments, the air quality sensor component may comprise an air quality sensor that may, for example but not limited to, determine the air quality levels within the enclosed space and/or in the breath exhaled by the user. Examples of the air quality sensor component include, but are not limited to, volatile organic compounds (VOC) sensors, oxygen sensors, carbon dioxide sensors, and/or the like.

Additionally, or alternatively, an example mask component in accordance with some embodiments of the present disclosure may comprise one or more sound sensor components. In some embodiments, at least one sound sensor component is positioned within the respiratory protective device. For example, one or more sound sensor components are disposed on an inner surface of the inner shell component 216. For example, referring now to FIG. 2D, an example sound sensor component 238 is disposed on the inner surface 232 of the inner shell component 216. Additionally, or alternatively, one or more sound sensor components may be disposed at one or more locations in addition to or in alternative of the example shown in FIG. 2D.

In some embodiments, an example sound sensor component comprises a sound sensor that converts sound waves into electrical signals. For example, based on the detected sound waves, the example sound sensor component generates detected sound signals (for example, in the form of electrical current signals, electrical voltage signals, and/or the like). Examples of sound sensor components include, but are not limited to, microphones, acoustic sensors, noise sensors, and/or the like. As an example, an example sound sensor component may be in the form of an in-mask microphone that provides environmental noise cancellation (ENC) features for voice calls.

As described above, an example respiratory protective device 100 provides example earpiece devices. In some embodiments, a user may utilize the earpiece devices and the one or more sound sensor components to conduct telephone calls (for example, voice calls). For example, the earpiece devices may provide audio output for the telephone call and the one or more sound sensor components may provide audio input for the telephone call.

While the description above provides example sensor components in an example mask component, it is noted that the scope of the present disclosure is not limited to the description above. For example, an example mask component may comprise one or more additional and/or alternative sensor components.

Referring now to FIG. 3, an example circuit diagram of an example respiratory protective device 300 in accordance with some example embodiments described herein is illustrated. In particular, FIG. 3 illustrates example electronic components of an example respiratory protective device 300 in accordance with various example embodiments of the present disclosure.

As shown in FIG. 3, the example respiratory protective device 300 may comprise a circuit board component 301 that is electronically coupled to one or more sensor components (such as, but not limited to, the air quality sensor component 303, the pressure sensor component 305), one or more fan components (such as the fan component 307), the device sound sensor component 309, and/or the like.

As described above, the one or more electronic components are electronically coupled to the circuit board component 301. In the example shown in FIG. 3, the one or more electronic components comprise a main controller component 311, an analog-to-digital converter component 317, a device data communication component 319, and/or the like.

In the example shown in FIG. 3, the main controller component 311 comprises a processor 313 and a memory 315.

In some embodiments, the processor 313 (and/or co-processor or any other processing circuitry assisting or otherwise associated with the processor) may be in communication with the memory 315 via a bus for passing information among components of the apparatus. The memory 315 may be non-transitory and may include, for example, one or more volatile and/or non-volatile memories. In other words, for example, the memory 315 may be an electronic storage device (e.g., a computer readable storage medium). The memory 315 may be configured to store information, data, content, applications, instructions, and/or the like, for enabling the main controller component 311 to carry out various functions in accordance with example embodiments of the present disclosure.

In some embodiments, the processor 313 may be embodied in a number of different ways and may, for example, include one or more processing devices configured to perform independently. Additionally, or alternatively, the processor 313 may include one or more processors configured in tandem via a bus to enable independent execution of instructions, pipelining, and/or multithreading.

For example, the processor 313 may be embodied as one or more complex programmable logic devices (CPLDs), microprocessors, multi-core processors, co-processing entities, application-specific instruction-set processors (ASIPs), and/or controllers. Further, the processor 313 may be embodied as one or more other processing devices or circuitry. The term circuitry may refer to an entirely hardware embodiment or a combination of hardware and computer program products. Thus, the processor 313 may be embodied as integrated circuits, application specific integrated circuits (ASICs), field programmable gate arrays (FPGAs), programmable logic arrays (PLAs), hardware accelerators, other circuitry, and/or the like. As will therefore be understood, the processor 313 may be configured for a particular use or configured to execute instructions stored in volatile or non-volatile media or otherwise accessible to the processor 313. As such, whether configured by hardware or computer program products, or by a combination thereof, the processor 313 may be capable of performing steps or operations according to embodiments of the present invention when configured accordingly.

The use of the terms "processing circuitry" or "processor" may be understood to include a single core processor, a multi-core processor, multiple processors internal to the apparatus, and/or remote or "cloud" processors.

In some embodiments, the memory 315 stores non-transitory program codes or non-transitory program instructions. In some embodiments, the memory 315 may comprise volatile storage or memory such as, but not limited to, random-access memory (RAM), dynamic random access memory (DRAM), static random access memory (SRAM), fast page mode dynamic random access memory (FPM DRAM), extended data out DRAM (EDO DRAM), synchronous DRAM (SDRAM), double data rate SDRAM (DDR SDRAM), double data rate 2 SDRAM (DDR2 SDRAM), double data rate 3 SDRAM (DDR3 SDRAM), Rambus DRAM (RDRAM), Rambus inline memory module (RIMM), dual in-line memory module (DIMM), single in-line memory module (SIMM), video random access memory (VRAM), cache memory, register memory, and/or the like. Additionally, or alternatively, the memory 315 may comprise non-volatile storage or memory such as, but not limited to, hard disks, read-only memory (ROM), programmable ROM (PROM), erasable programmable ROM (EPROM), electrically erasable programmable ROM (EEPROM), flash memory, SD memory cards, memory sticks, conductive-bridging RAM (CBRAM), parameter RAM (PRAM), ferroelectric RAM (FeRAM), resistive RAM (RRAM), SONOS, racetrack memory, and/or the like. Additionally, or alternatively, the memory 315 may store databases, database instances, database management system entities, data, applications, programs, program modules, scripts, source code, object code, byte code, compiled code, interpreted code, machine code, executable instructions, and/or the like. The term database, database instance, database management system entity, and/or similar terms used herein interchangeably and in a general sense to refer to a structured or unstructured collection of information/data that is stored in a computer-readable storage medium.

In some embodiments, the processor 313 may be configured to execute instructions stored in the memory 315 or otherwise accessible to the processor. Alternatively, or additionally, the processor 313 may be configured to execute hard-coded functionality. As such, whether configured by hardware or software methods, or by a combination thereof, the processor 313 may represent an entity (e.g., physically embodied in circuitry) capable of performing operations according to an embodiment of the present disclosure while configured accordingly. Additionally, or alternatively, when the processor 313 is embodied as an executor of software instructions, the instructions may specifically configure the processor to perform the algorithms and/or operations described herein when the instructions are executed.

In some embodiments, the memory 315 and the non-transitory program code are configured to, with the processor 313, cause the main controller component 311 to execute one or more methods and/or operations of method(s) described herein. Although the components are described with respect to functional limitations, it should be understood that the particular implementations necessarily include the use of particular hardware. It should also be understood that certain of the components described herein may include similar or common hardware. For example, two sets of circuitries may both leverage use of the same processor, network interface, storage medium, or the like to perform their associated functions, such that duplicate hardware is not required for each set of circuitries. The use of the term "circuitry" as used herein with respect to components of the apparatus should therefore be understood to include particular hardware configured to perform the functions associated with the particular circuitry as described herein.

In some embodiments, the main controller component 311 is electronically coupled to one or more other electronic components on the circuit board component 301. In the example shown in FIG. 3, the main controller component 311 is electronically coupled to, such as but not limited to, the analog-to-digital converter component 317 and the device data communication component 319.

In some embodiments, the analog-to-digital converter component 317 translates / converts analog signals from other components into digital signals for the main controller component 311. For example, the analog-to-digital converter component 317 converts, such as but not limited to, signals from the air quality sensor component 303, signals from the pressure sensor component 305, signals from the fan component 307, signals from device sound sensor component 309, and/or the like. Examples of the analog-to-digital converter component 317 include, but not limited to, successive approximation (SAR) analog-to-digital converters, delta-sigma analog-to-digital converters, dual slope analog-to-digital converters, pipelined analog-to-digital converters, and/or the like.

In some embodiments, the device data communication component 319 may be any means such as a device or circuitry embodied in either hardware or a combination of hardware and software that is configured to receive and/or transmit data from/to a network and/or any other device, circuitry, or module in communication with the main controller component 311. In this regard, the device data communication component 319 may include, for example, a network interface for enabling communications with a wired or wireless communication network. For example, the device data communication component 319 may include one or more network interface cards, antennae, buses, switches, routers, modems, and supporting hardware and/or software, or any other device suitable for enabling communications via a network. Additionally, or alternatively, the device data communication component 319 may include the circuitry for interacting with the antenna/antennae to cause transmission of signals via the antenna/antennae or to handle receipt of signals received via the antenna/antennae.

In some embodiments, the device data communication component 319 communicates data, content, information, and/or similar terms used herein interchangeably that can be transmitted, received, operated on, processed, displayed, stored, and/or the like to and/or from the main controller component 311.

In some embodiments, such communications can be executed by using any of a variety of wireless communication protocols such as, but not limited to, Bluetooth protocols, near field communication (NFC) protocols, general packet radio service (GPRS), Universal Mobile Telecommunications System (UMTS), Code Division Multiple Access 1900 (CDMA1900), CDMA1900 1X (IxRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), Institute of Electrical and Electronics Engineers (IEEE) 802.11 (Wi-Fi), Wi-Fi Direct, 802.16 (WiMAX), ultra-wideband (UWB), infrared (IR) protocols, Wibree, wireless universal serial bus (USB) protocols, and/or any other wireless protocol.

Additionally, or alternatively, such communications can be executed by using any of a variety of wired communication protocols, but not limited to, such as fiber distributed data interface (FDDI), digital subscriber line (DSL), Ethernet, asynchronous transfer mode (ATM), frame relay, data over cable service interface specification (DOCSIS), or any other wired transmission protocol.

In accordance with some embodiments of the present disclosure, one or more electronic components in the example mask component (such as, but not limited to, sensor components, fan components, and/or the like) are electronically coupled to one or more electronic components on the circuit board component 301 (such as, but not limited to, the main controller component 311, the analog-to-digital converter component 317, the device data communication component 319, and/or the like).

In some embodiments, the one or more electronic components in the example mask component are electronically coupled to the one or more electronic components on the circuit board component 301 through wired means, and can transmit data to and receive data from electronic components on the circuit board component 301 (such as, but not limited to, the main controller component 311, the analog-to-digital converter component 317, the device data communication component 319, and/or the like). Additionally, or alternatively, the one or more electronic components in the example mask component are electronically coupled to the one or more electronic components on the circuit board component 301 through wireless means.

In the example shown in FIG. 3, one or more pressure sensor components (such as, but not limited to, the pressure sensor component 305) are in electronic communication with the circuit board component 301 (such as, but not limited to, the main controller component 311, the analog-to-digital converter component 317, the device data communication component 319, and/or the like). For example, the pressure sensor component 305 may transmit air pressure indications indicating the detected air pressure to the main controller component 311 or the analog-to-digital converter component 317. In some embodiments, each of the air pressure indications may comprise an air pressure value that corresponds to the air pressure in the enclosed space as defined by the face seal component 218 and the inner shell component 216.

Additionally, or alternatively, the one or more humidity sensor components and/or one or more air quality sensor components (such as, but not limited to, the air quality sensor component 303) are in electronic communication with the circuit board component 301 (such as, but not limited to, the main controller component 311, the analog-to-digital converter component 317, the device data communication component 319, and/or the like). For example, each of the one or more humidity sensor components can transmit humidity indications indicating the detected humidity levels (for example, relative humidity levels) to the main controller component 311 or the analog-to-digital converter component 317. Additionally, or alternatively, each of the one or more air quality sensor components can transmit air quality indications (such as, but not limited to, VOC concentration indications, oxygen concentration indications, carbon dioxide concentration indications, and/or the like) to the main controller component 311 or the analog-to-digital converter component 317.

Additionally, or alternatively, the one or more device sound sensor components (such as, but not limited to, the device sound sensor component 309) are in electronic communication with the circuit board component 301 (such as, but not limited to, the main controller component 311, the analog-to-digital converter component 317, the device data communication component 319, and/or the like). For example, each of the one or more device sound sensor components can generate and transmit sound signals to the main controller component 311, the analog-to-digital converter component 317, and/or the device data communication component 319).

Additionally, or alternatively, the one or more fan components (such as, but not limited to, the fan component 307) are in electronic communication with the circuit board component 301 (such as, but not limited to, the main controller component 311, the analog-to-digital converter component 317, the device data communication component 319, and/or the like). For example, each of the one or more fan components can generate and transmit fan speed signals (e.g. comprising a rotation speed indication associated with the corresponding fan component) to the main controller component 311, the analog-to-digital converter component 317, and/or the device data communication component 319.

While the description above provides example sensor components that are in data communications with the main controller component, it is noted that the scope of the present disclosure is not limited to the description above. In some examples, one or more other sensor components may additionally or alternatively be in electronic communications with the main controller component.

Referring now to FIG. 4, an example circuit diagram of an example respiratory protective device 400 in accordance with some example embodiments described herein is illustrated. In particular, FIG. 4 illustrates example electronic components of an example respiratory protective device in accordance with various example embodiments of the present disclosure.

In the example shown in FIG. 4, the example respiratory protective device 400 may comprise a main controller component 402, similar to the example main controller components described above.

In some embodiments, the main controller component 402 is in electronic communications with other components such as, but not limited to, the pressure sensor component 404, the humidity sensor component 406, one or more light components (such as, but not limited to, a light component 408A and a light component 408B) that are disposed on one or more puck components, one or more fan components (such as, but not limited to, a fan component 412A and fan component 412B), key components 414, and/or the speaker circuit 418.

In some embodiments, the pressure sensor component 404 may transmit air pressure indications to the main controller component 402. As described above, each of the air pressure indications may comprise an air pressure value that corresponds to the air pressure in the enclosed space as defined by the face seal component 218 and the inner shell component 216.

In some embodiments, the humidity sensor component 406 may transmit humidity indications to the main controller component 402. As described above, the humidity indications may indicate relative humidity levels within the enclosed space defined by the face seal component and the inner shell component of the respiratory protective device on at least a portion of the user's face, similar to those described above.

While the description above provides an example of a humidity sensor component, it is noted that the scope of the present disclosure is not limited to the description above. In some examples, one or more air quality sensor components are electronically coupled to the main controller component 402 in addition to or in alternative of the humidity sensor component. For example, each of the one or more air quality sensor components may generate air quality indications may indicate for example, but not limited to, VOC concentration indications, oxygen concentration indications, carbon dioxide concentration indications, and/or the like.

In some embodiments, each of the one or more the light components (such as, but not limited to, the light component 408A and the light component 408B) may be in the form of one or more light-emitting diode (LED) rings that are disposed on one or more puck components (for example, on the left puck component and the right puck component). For example, the light component 408A may be disposed on the left puck component and the light component 408B may be disposed on the right puck component. In some embodiments, the main controller component 402 may transmit control signals to the one or more light components so as to adjust the color and/or intensity of light emitted by the one or more light components.

In some embodiments, each of the one or more fan components (such as, but not limited to, the fan component 412A and/or the fan component 412B) can generate and transmit fan speed signals (e.g., comprising a rotation speed indication associated with the corresponding fan component) to the main controller component 402. In some embodiments, the main controller component may transmit a fan component activation signal to a fan component (e.g., the fan component 412A and/or the fan component 412B) that causes the fan component to start operating. In some embodiments, the main controller component may transmit a fan component deactivation signal to the fan component that causes a fan component (e.g., the fan component 412A and/or the fan component 412B) to stop operating. In some embodiments, the main controller component may transmit a forward rotation start signal to a fan component (e.g., the fan component 412A and/or the fan component 412B) that causes the fan component to start forward rotation. In some embodiments, the main controller component may transmit a reverse rotation start signal to a fan component (e.g., the fan component 412A and/or the fan component 412B) that causes the fan component to start reverse rotation.

In some embodiments, the main controller component 402 is in electronic communications with the key components 414. For example, when a user presses a button on the key components 414, the key components 414 may transmit a corresponding signal to the main controller component 402. In such an example, based on which button that the user presses, the main controller component 402 triggers one or more operations associated with other components of the respiratory protective device 400 and/or one or more earpiece devices associated with the respiratory protective device 400 (such as, but not limited to, adjusting the volume, triggering noise canceling mode, and/or the like).

In some embodiments, the main controller component 402 is in electronic communication with the speaker circuit 418. For example, the main controller component 402 may transmit control signals to an earphone in the speaker circuit 418 so as to adjust volume, noise canceling mode, and/or the like of the earphone.

In some embodiments, the charging circuit component 416 supplies power to main controller component 402 and one or more other electronic components shown in FIG. 4 (such as, but not limited to, the fan component 412A and the fan component 412B), similar to those described.

As described above, there are many technical challenges and difficulties associated with wireless charging. For example, it is technically challenging and difficult to implement wireless charging in respiratory protective devices due to the curved surface of the respiratory protective devices.

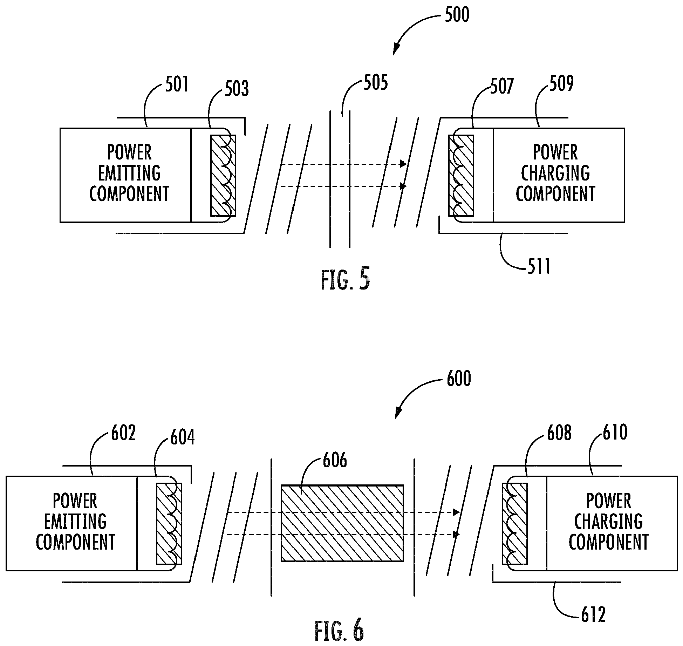

Referring now to FIG. 5, an example schematic diagram illustrates an example wireless charging system 500. In some embodiments, the example wireless charging system 500 comprises a power emitting component that emits power and a power receiving component that receives power from the power emitting component.

In the example shown in FIG. 5, the example power receiving component may be in the form of the respiratory protective device 511. For example, similar to those described above, the respiratory protective device 511 comprises a power charging component 509. In some embodiments, the power charging component 509 is electronically coupled to the circuit board component of the example respiratory protective device 511 and provides power to the one or more electronic components of the example respiratory protective device 511.

Similar to those described above, the power charging component 509 comprises a device power source component that may be in the form of, for example but not limited to, one or more rechargeable batteries. In some embodiments, a plurality of power receiving coils 507 is electronically coupled to the power charging component 509 of the respiratory protective device 511 to charge the device power source component.

In some embodiments, the plurality of power receiving coils 507 may receive electric power from the power emitting component 501 through low-power wireless charging technology (also referred to as electromagnetic induction wireless charging). For example, the power emitting component 501 may be in the form of a wireless power charging emitter that comprises a plurality of power emitting coils 503. In some embodiments, the power emitting component 501 may provide wireless charging based on industry standards such as, but not limited to, Wireless Power Consortium (WPC) Qi standard.

In some embodiments, the plurality of power emitting coils 503 and the plurality of power receiving coils 507 are positioned adjacent to one another for near-field inductive power transmission. When the plurality of power emitting coils 503 are electronically coupled to a power source (for example, a power outlet), electric current flows through the plurality of power emitting coils 503, which induces electric current in the plurality of power receiving coils 507 through inductive coupling. To stabilize the power transmission process, a global feedback mechanism from the plurality of power receiving coils 507 to the plurality of power emitting coils 503 is implemented (for example, via backscattering modulation with switching frequencies ranging from 112 to 205 KHz).

As described above, there are technical challenges and difficulties associated with implementing wireless charging in respiratory protective devices. For example, there is a gap 505 between the example respiratory protective device 511 and the power emitting component 501 due to the curved surface of the example respiratory protective device 511. In the example shown in FIG. 5, at least a portion of the magnetic induction lines leaks out through the gap 505, resulting in low charging efficiency.

Various embodiments of the present disclosure overcome the above-referenced technical challenges and difficulties, and provide various technical benefits and advantages. Referring now to FIG. 6, an example block diagram illustrating an example wireless charging system 600 in accordance with some embodiments of the present disclosure is provided.

In the example shown in FIG. 6, the example wireless charging system 600 comprises a power emitting component that emits power and a power receiving component that receives power from the power emitting component.

Similar to the example illustrated above in connection with FIG. 5, the example power receiving component of the example wireless charging system 600 may be in the form of the respiratory protective device 612. For example, the respiratory protective device 612 comprises a power charging component 610. In some embodiments, the power charging component 610 is electronically coupled to the circuit board component of the example respiratory protective device 612 and provides power to the one or more electronic components of the example respiratory protective device 612.

In some embodiments, the power charging component 509 comprises a device power source component that may be in the form of, for example but not limited to, one or more rechargeable batteries. In some embodiments, a plurality of power receiving coils 608 is electronically coupled to the power charging component 610 of the respiratory protective device 612 to charge the device power source component.

In some embodiments, the plurality of power receiving coils 608 may receive electric power from the power emitting component 602 through low-power wireless charging technology (also referred to as electromagnetic induction wireless charging). For example, the power emitting component 602 may be in the form of a wireless power charging emitter that comprises a plurality of power emitting coils 604. In some embodiments, the power emitting component 602 may provide wireless charging based on industry standards such as, but not limited to, WPC Qi standard.

In some embodiments, the plurality of power emitting coils 604 and the plurality of power receiving coils 608 are positioned adjacent to one another for near-field inductive power transmission. When the plurality of power emitting coils 604 are electronically coupled to a power source (for example, a power outlet), electric current flows through the plurality of power emitting coils 604, which induces electric current in the plurality of power receiving coils 608 through inductive coupling. To stabilize the power transmission process, a global feedback mechanism from the plurality of power receiving coils 608 to the plurality of power emitting coils 604 is implemented (for example, via backscattering modulation with switching frequencies ranging from 112 to 205 KHz).

As described above, the respiratory protective device 612 may comprise a curved surface that does not match the surface of the power emitting component 602. As such, there is a gap between the respiratory protective device 612 and the power emitting component 602 that can cause low charging efficiency.

Various embodiments overcome the technical challenges and difficulties associated with wirelessly charging the respiratory protective device 612 with the curved surface. For example, example embodiments of the present disclosure may provide a charging relay component 606 that is positioned in the gap between the respiratory protective device 612 and the power emitting component 602. In some embodiments, the charging relay component 606 comprises magnetic or ferromagnetic material. For example, the charging relay component 606 may comprise magnetic or ferromagnetic plasticine. Because of the magnetic / ferromagnetic nature of such materials, the charging relay component 606 can prevent the magnetic induction lines from leaking through the gap between the respiratory protective device 612 and the power emitting component 602. As such, the example wireless charging system 600 provides improved power charging efficiency as compared to the power charging efficiency of the example wireless charging system 500.

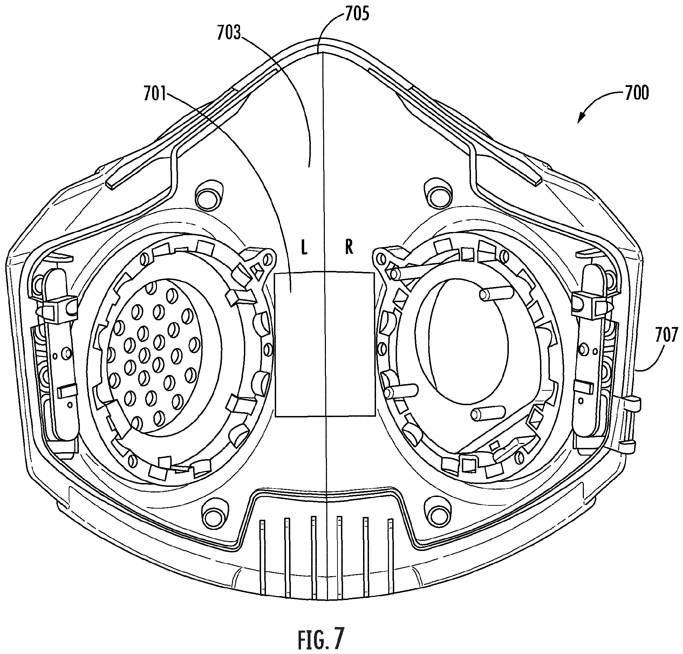

Referring now to FIG. 7, an example power receiving component 700 in accordance with some embodiments of the present disclosure is illustrated.

In some embodiments, the example power receiving component 700 comprises a plurality of power receiving coils 701, similar to the power receiving coils described above in connection with at least FIG. 5 and FIG. 6.

In some embodiments, the example power receiving component 700 comprises a power receiver curved portion 705 that is in a curved shape. For example, the power receiver curved portion 705 may define a receiver inner curved surface 703 that is the inner surface of the example power receiving component 700 corresponding to the power receiver curved portion 705. In some embodiments, the plurality of power receiving coils 701 is secured on the receiver inner curved surface 703.

In some embodiments, the plurality of power receiving coils 701 comprises at least one flexibly printed power receiving coil. In such examples, the flexibly printed power receiving coil refers to a coil that is manufactured as a flexible printed circuit. In such an example, the flexible printed circuit comprises at least a metallic layer of traces (for example, comprising copper) and a dielectric layer (for example, polyimide). As such, the flexibly printed power receiving coil can bend to match the contour of the receiver inner curved surface 703.

In some embodiments, the example power receiving component 700 comprises a magnetic sheet. In particular, the magnetic sheet is disposed between the plurality of power receiving coils 701 and the receiver inner curved surface 703 of the power receiver curved portion 705. For example, the magnetic sheet may be attached to the receiver inner curved surface 703 through one or more chemical glues, and the example power receiving component 700 may be attached to the magnetic sheet.

In some embodiments, the magnetic sheet comprises magnetic or ferromagnetic materials. For example, the magnetic sheet may comprise ferrite magnetic powder that is mixed with polymer resin. Because of the magnetic / ferromagnetic nature of the magnetic sheet, the magnetic sheet can capture magnetic induction lines from a power emitting component, further improving the wireless charging efficiency.

In the example shown in FIG. 7, the example power receiving component 700 is in the form of an example outer shell component 707 of an example respiratory protective device in accordance with some embodiments of the present disclosure. In some embodiments, the outer shell component 707 comprises the power receiver curved portion 705. In some embodiments, a middle section of the outer shell component 707 comprises the power receiver curved portion 705. For example, the power receiver curved portion 705 may correspond to the nose portion of the example respiratory protective device.

Similar to those described above, the plurality of power receiving coils 701 is electronically coupled to a power charging component of the respiratory protective device. For example, the power charging component comprises a device power source component that may be in the form of, for example but not limited to, one or more rechargeable batteries. In such an example, the plurality of power receiving coils 701 may provide power to charge the one or more rechargeable batteries.

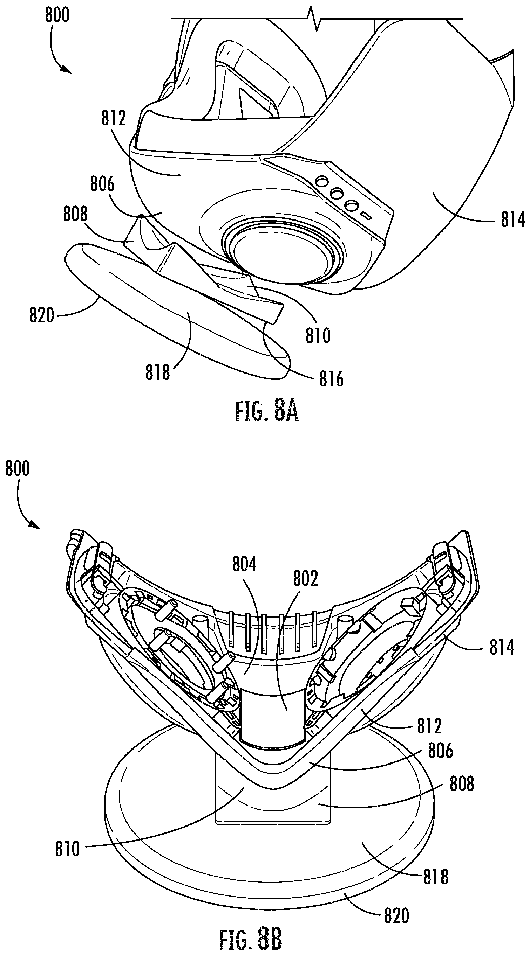

Referring now to FIG. 8A and FIG. 8B, example views associated with an example wireless charging system 800 in accordance with some embodiments of the present disclosure are illustrated. In particular, the example wireless charging system 800 comprises a power emitting component 820, a charging relay component 808, and a power receiving component in the form of an outer shell component 814 of a respiratory protective device.

In some embodiments, the outer shell component 814 of a respiratory protective device comprises a power receiver curved portion 806 that is in a curved shape. For example, the power receiver curved portion 806 may define a receiver inner curved surface 804 that is the inner surface of the example respiratory protective device corresponding to the power receiver curved portion 806. In some embodiments, the plurality of power receiving coils 802 is secured on the receiver inner curved surface 804.

In some embodiments, the wireless charging system 800 comprises a plurality of power receiving coils 802. In some embodiments, the plurality of power receiving coils 802 is secured on the receiver inner curved surface 804 of a power receiver curved portion 806.

In some embodiments, the plurality of power receiving coils 802 comprises at least one flexibly printed power receiving coil. In such examples, the flexibly printed power receiving coil refers to a coil that is manufactured as a flexible printed circuit. In such an example, the flexible printed circuit comprises at least a metallic layer of traces (for example, comprising copper) and a dielectric layer (for example, polyimide). As such, the flexibly printed power receiving coil can bend to match the contour of the receiver inner curved surface 804.

In some embodiments, the wireless charging system 800 comprises a magnetic sheet. In particular, the magnetic sheet is disposed between the plurality of power receiving coils 802 and the receiver inner curved surface 804 of the power receiver curved portion 806. For example, the magnetic sheet may be attached to the receiver inner curved surface 804 through one or more chemical glues, and the plurality of power receiving coils 802 may be attached to the magnetic sheet.

In some embodiments, the magnetic sheet comprises magnetic or ferromagnetic materials. For example, the magnetic sheet may comprise ferrite magnetic powder that is mixed with polymer resin. Because of the magnetic / ferromagnetic nature of the magnetic sheet, the magnetic sheet can capture magnetic induction lines from a power emitting component, further improving the wireless charging efficiency.

In some embodiments, the wireless charging system 800 comprises an outer shell component 814 of the respiratory protective device. In some embodiments, the outer shell component 814 functions as a power receiving component. For example, the outer shell component 814 comprises the power receiver curved portion 806 described above. In some embodiments, a middle section (such as, but not limited to, the nose portion) of the outer shell component 814 comprises the power receiver curved portion 806. In some embodiments, the magnetic sheet and/or the plurality of power receiving coils 802 are attached to the inner surface of the outer shell component 814 that corresponds to the power receiver curved portion 806.

Similar to those described above, the plurality of power receiving coils 802 is electronically coupled to a power charging component of the respiratory protective device. For example, the power charging component comprises a device power source component that may be in the form of, for example but not limited to, one or more rechargeable batteries. In such an example, the plurality of power receiving coils 802 may provide power to charge the one or more rechargeable batteries.

In some embodiments, the outer shell component 814 further comprises a receiver outer curved surface 812 that corresponds to the power receiver curved portion 705. In some embodiments, the receiver inner curved surface 804 is opposite to the receiver outer curved surface 812. For example, the receiver inner curved surface 804 refers to the inner surface of the power receiver curved portion 806, and the receiver outer curved surface 812 refers to an outer surface of the power receiver curved portion 806.

In some embodiments, the wireless charging system 800 comprises the charging relay component 808. In some embodiments, the charging relay component 808 comprises ferromagnetic material(s) and/or magnetic material(s).

In some embodiments, the charging relay component 808 may comprise materials that are also materials for a transformer core. For example, the ferromagnetic material of the charging relay component 808 comprises one or more of steel material or iron material. In such an example, the charging relay component 808 may fabricate the charging relay component 808 by providing the ferromagnetic materials to a mold that matches a power receiver curved portion described above, and then adding a casing for the charging relay component 808 as required.

In some embodiments, the charging relay component 808 comprises modeling clay material (such as, but not limited to, silly putty materials). In some embodiments, the modeling clay material does not comprise calcium silicate. For example, calcium silicate from the modeling clay material may be replaced by ferromagnetic material(s) and/or magnetic material(s) so that the charging relay component 808 is magnetic or ferromagnetic.

While the description above provides example materials associated with the charging relay component 808 (including, but not limited to, soft magnetic stick material, transformer core materials, and/or the like), it is noted that the scope of the present disclosure is not limited to the description above. In some embodiments, an example charging relay component may comprise one or more additional and/or alternative materials.

In some embodiments, the example wireless charging system 800 comprises the power emitting component 820. In some embodiments, the power emitting component 820 may be in the form of a wireless charging base.

In some embodiments, the power emitting component 820 comprises an emitter outer surface 818 and an emitter inner surface. In some embodiments, the emitter inner surface is opposite to the emitter outer surface 818.

In some embodiments, the wireless charging system 800 comprises a plurality of power emitting coils secured on the emitter inner surface of a power emitting component 820. In some embodiments, the plurality of power emitting coils is electronically coupled to a power source, similar to those described above.

In some embodiments, the charging relay component 808 defines a receiver relay curved surface 810. In some embodiments, the receiver relay curved surface 810 matches the receiver outer curved surface 812 of the power receiver curved portion 806. For example, when the outer shell component 814 is positioned on top of the charging relay component 808, the receiver relay curved surface 810 of the charging relay component 808 is in contact with the receiver outer curved surface 812. As such, various embodiments of the present disclosure can provide technical benefits and advantages such as, but not limited to, increased power charging efficiency.

In some embodiments, the charging relay component 808 defines an emitter relay surface 816. In some embodiments, the receiver relay curved surface 810 of the charging relay component 808 is opposite to the emitter relay surface 816 of the charging relay component 808.

In some embodiments, the emitter relay surface 816 of the charging relay component 808 matches the emitter outer surface 818 of the power emitting component 820. For example, when the charging relay component 808 is positioned on top of the power emitting component 820, the emitter relay surface 816 of the charging relay component 808 is in contact with the emitter outer surface 818 of the power emitting component 820.

As described above, in some embodiments, the receiver relay curved surface 810 can be in contact with the receiver outer curved surface 812 of the charging relay component 808, and the emitter relay surface 816 can be in contact with the emitter outer surface 818. In some embodiments, when the receiver relay curved surface 810 is in contact with the receiver outer curved surface 812 and the emitter relay surface 816 is in contact with the emitter outer surface 818, the plurality of power emitting coils is aligned with the plurality of power receiving coils 802, providing technical benefits and advantages such as, but not limited to, improved charging efficiency.

As such, the examples illustrated in connection with at least FIG. 8A and FIG. 8B provide various technical benefits and advantages. For example, FIG. 8A and FIG. 8B illustrate examples of providing wireless charging to electronic devices (such as, but not limited to, respiratory protective devices) that comprise curved surfaces. In some embodiments, a charging relay component 808 is positioned to fill the gap between the power emitting component 820 and the example respiratory protective device. In some embodiments, the charging relay component 808 is detachable and matches the receiver outer curved surface of the example respiratory protective device. In some embodiments, the charging relay component 808 enables wireless charging of the example respiratory protective device without inefficiency or failure to charge. In some embodiments, the example wireless charging system 800 may implement one or more wireless charging standards (such as, but not limited to, the WPC 1.2 standard that results in spacing up to 45 mm).

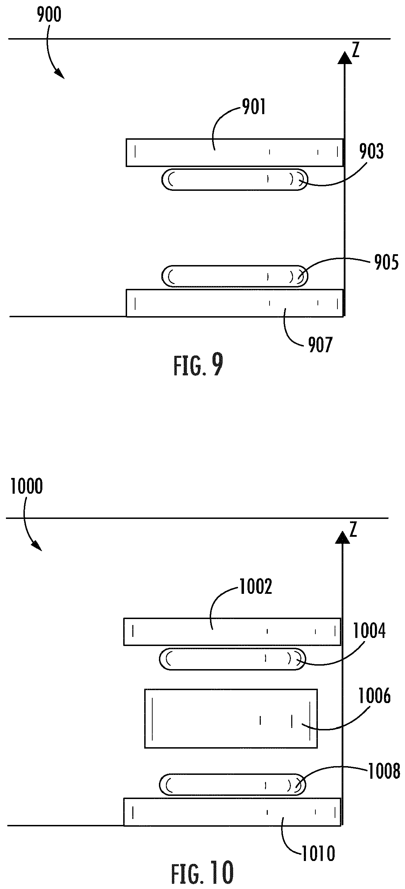

Referring now to FIG. 9 and FIG. 10, example simulation diagrams in accordance with some embodiments of the present disclosure are provided.

In particular, FIG. 9 illustrates an example simulation diagram of an example wireless charging system 900. The example wireless charging system 900 comprises an example power transmitting component 901 and an example power receiving component 907. In some embodiments, the example power transmitting component 901 is electronically coupled to the plurality of power transmitting coils 903, and the example power receiving component 907 is electronically coupled to the plurality of power receiving coils 905. The example wireless charging system 900 does not comprise any charging relay component that fills the gap between the example power transmitting component 901 and the example power receiving component 907.

In contrast, FIG. 10 illustrates an example simulation diagram of an example wireless charging system 1000. The example wireless charging system 1000 comprises an example power transmitting component 1002 and an example power receiving component 1010. In some embodiments, the example power transmitting component 1002 is electronically coupled to the plurality of power transmitting coils 1004, and the example power receiving component 1010 is electronically coupled to the plurality of power receiving coils 1008. In some embodiments, the example wireless charging system 1000 comprises the charging relay component 1006 that fills the gap between the example power transmitting component 1002 and the example power receiving component 1010.

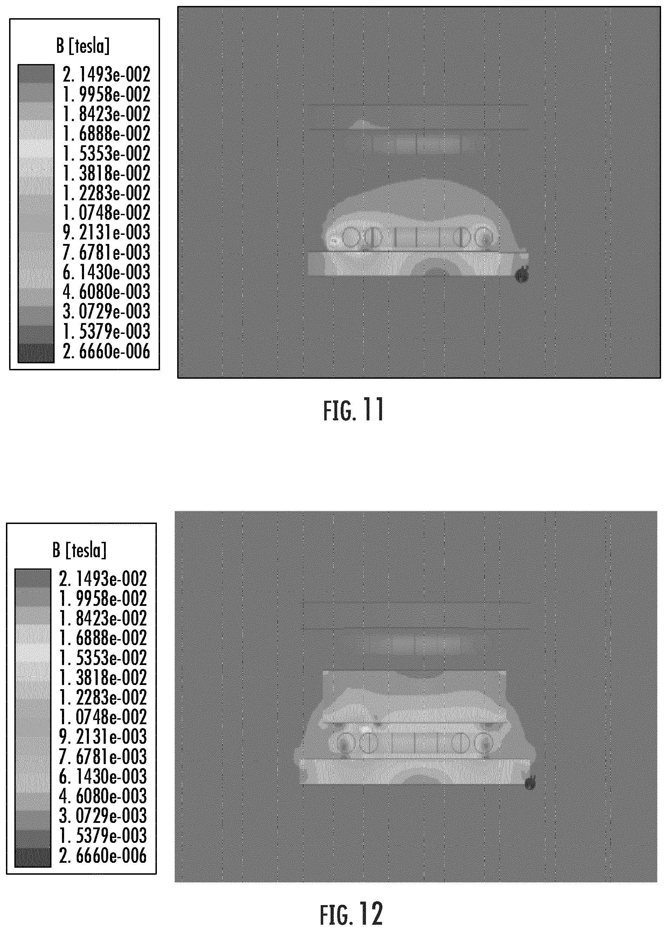

Referring not to FIG. 11 to FIG. 14, example simulation results of an example wireless charging system in accordance with some embodiments of the present disclosure are illustrated. In particular, FIG. 11 illustrates example profile magnetic field maps associated with a wireless charging system that does not comprise charging relay component, and FIG. 12 illustrates example profile magnetic field map associated with a wireless charging system that comprises charging relay component. By comparing FIG. 12 with FIG. 11, the magnetic field range in FIG. 12 is larger than the magnetic field range in FIG. 11 due to the addition of the charging relay component.

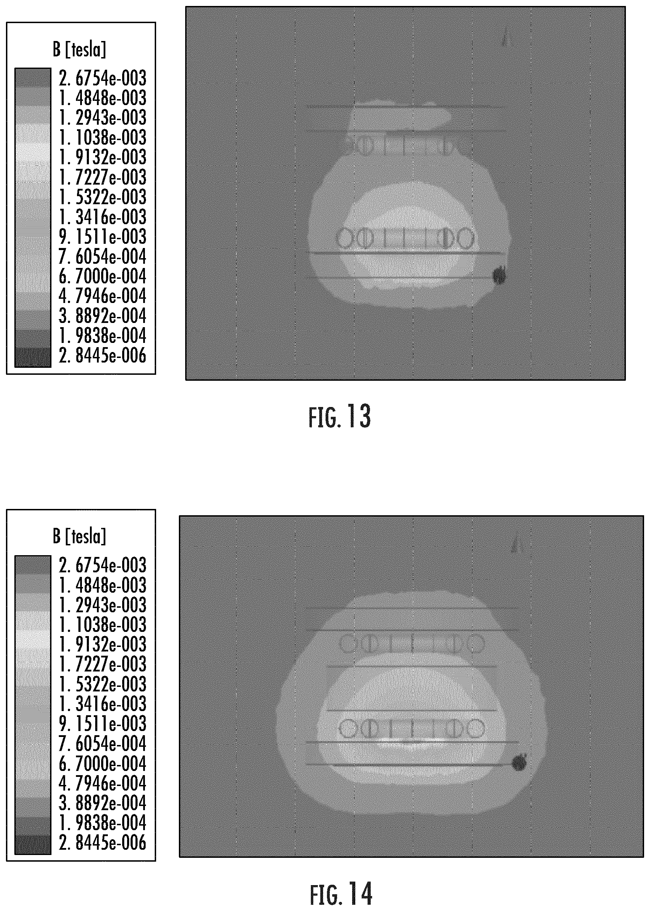

FIG. 13 illustrates example magnetic field side views associated with a wireless charging system that does not comprise charging relay component, and FIG. 14 illustrates example magnetic field side views associated with a wireless charging system that comprises charging relay component. By comparing FIG. 14 with FIG. 13, the magnetic field range in FIG. 14 is larger than the magnetic field range in FIG. 13 due to the addition of the charging relay component.

As such , FIG. 11 to FIG. 14 highlight various technical benefits and advantages associated with implementing charging relay components.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

## Claims

1. A wireless charging system comprising:
a plurality of power receiving coils secured on a receiver inner curved surface of a power receiver curved portion; and
a charging relay component comprising ferromagnetic material and defining a receiver relay curved surface, wherein the receiver relay curved surface matches a receiver outer curved surface of the power receiver curved portion.

2. The wireless charging system of claim 1, wherein the receiver inner curved surface is opposite to the receiver outer curved surface.

3. The wireless charging system of claim 1, further comprising:
an outer shell component of a respiratory protective device, wherein the outer shell component comprises the power receiver curved portion.

4. The wireless charging system of claim 3, wherein a middle section of the outer shell component comprises the power receiver curved portion.

5. The wireless charging system of claim 3, wherein, when the outer shell component is positioned on top of the charging relay component, the receiver relay curved surface of the charging relay component is in contact with the receiver outer curved surface.

6. The wireless charging system of claim 3, wherein the plurality of power receiving coils is electronically coupled to a power charging component of the respiratory protective device.

7. The wireless charging system of claim 1, further comprising:
a magnetic sheet disposed between the plurality of power receiving coils and the receiver inner curved surface of the power receiver curved portion.

8. The wireless charging system of claim 1, wherein the plurality of power receiving coils comprises at least one flexibly printed power receiving coil.

9. The wireless charging system of claim 1, wherein the ferromagnetic material comprises one or more of steel material or iron material.

10. The wireless charging system of claim 1, wherein the charging relay component further comprises modeling clay material.

11. The wireless charging system of claim 10, wherein the modeling clay material does not comprise calcium silicate.

12. The wireless charging system of claim 1, wherein the wireless charging system further comprises:
a plurality of power emitting coils secured on an emitter inner surface of a power emitting component.

13. The wireless charging system of claim 12, wherein the plurality of power emitting coils is electronically coupled to a power source.

14. The wireless charging system of claim 12, wherein the power emitting component comprises an emitter outer surface.

15. The wireless charging system of claim 14, wherein the emitter inner surface is opposite to the emitter outer surface.
